(19) Europäisches Patentamt
European Patent Office
Office européen des brevets

(11) EP 4 618 372 A1

(12) **EUROPEAN PATENT APPLICATION**

(43) Date of publication:
**17.09.2025 Bulletin 2025/38**

(21) Application number: **25158907.3**

(22) Date of filing: **19.02.2025**

(51) International Patent Classification (IPC):
***H02J 50/00*** *(2016.01)* ***H02J 50/10*** *(2016.01)*
***H02J 50/40*** *(2016.01)*

(52) Cooperative Patent Classification (CPC):
**H02J 50/005; H02J 50/10; H02J 50/402;** H02J 7/02; H02J 50/12; H02J 50/90

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2024 JP 2024041642**

(71) Applicant: **CANON KABUSHIKI KAISHA**
**Tokyo 146-8501 (JP)**

(72) Inventors:
- **SHOJI, Yuki**
  **Tokyo, 146-8501 (JP)**
- **YASUNO, Takashi**
  **Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **WIRELESS POWER TRANSMISSION SYSTEM**

(57) A wireless power transmission system includes a power transmission coil (801) and a power reception coil (802) that move relative to each other. The power transmission coil (801) includes a first region (320) for forming a coil having a first number of windings, and a second region (321) for forming a coil having a second number of windings. First power transmitted to the power reception coil in the first region (320) is higher than second power transmitted to the power reception coil in the second region (321).

**FIG.8A**

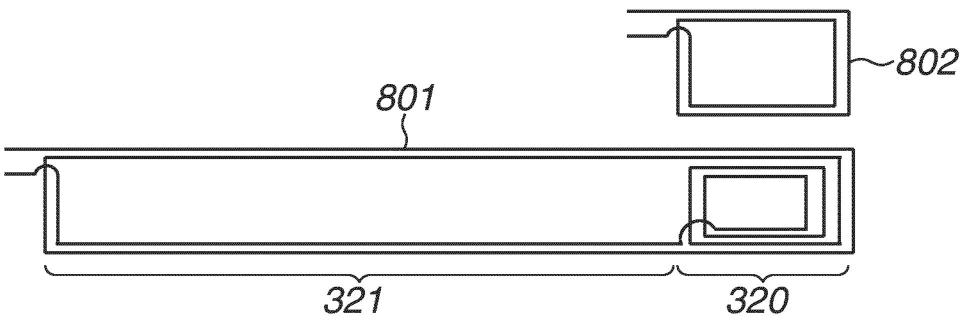


EP 4 618 372 A1

## Description

### BACKGROUND OF THE INVENTION

Field of the Invention

The present invention relates to a wireless power transmission system for wirelessly supplying power.

Description of the Related Art

In recent years, a wireless power transmission system for wirelessly supplying power to a moving body has been researched and developed.

For example, Japanese Patent Application Laid-Open No. 2013-014056 discusses a printer that wirelessly supplies power to a sliding ink cartridge by using narrow and long transmission coils. Wireless power transmission eliminates the power line to be worn by the coil movement and improves the product quality. Japanese Patent Application Laid-Open No. 2018-74855 discusses a coil configuration in which the number of windings depends on coil positions to prevent the coupling factor variation accompanied by the coil movement in a coupling state of solenoid-shaped coils facing each other.

The wireless power transmission systems discussed in Japanese Patent Application Laid-Open No. 2013-014056 and Japanese Patent Application Laid-Open No. 2018-74855 are, however, characterized in that the coupling factor is almost constant regardless of the coupling position between a power reception coil and a power transmission coil, and the optimum load impedance is also almost constant. Thus, a system that transmits high power at a specific coupling position and transmits low power at other coupling positions cannot achieve a high power transmission efficiency at the coupling position for transmitting high power. The system therefore has a large amount of overall loss, resulting in a coil temperature rise.

### SUMMARY OF THE INVENTION

The present invention is directed to providing a wireless power transmission system, in which a power reception coil moves over a power transmission coil, that maintains a high power transmission efficiency at a coupling position for transmitting high power to lower the coil temperature.

According to an aspect of the present invention, there is provided a wireless power transmission system as specified in claims 1 to 11.

Further features of the present invention will become apparent from the following description of embodiments with reference to the attached drawings.

### BRIEF DESCRIPTION OF THE DRAWINGS

Fig. 1 illustrates an example configuration of a wireless power transmission system according to embodiments.

Fig. 2 illustrates an example circuit of the wireless power transmission system according to a first embodiment.

Fig. 3 illustrates an example relation between transmission power required for the wireless power transmission system and a moving distance of a power reception coil according to the first embodiment.

Figs. 4A and 4B illustrate an example configuration of a power transmission coil according to a prior art.

Fig. 5 is a chart illustrating a relation between a coupling factor between the power transmission coil and the power reception coil and the moving distance of the power reception coil regarding the configuration illustrated in Figs. 4A and 4B.

Fig. 6 is a chart illustrating an input impedance of a power receiver and a power transmission efficiency regarding the configuration illustrated in Figs. 4A and 4B.

Fig. 7 is a chart illustrating the transmission efficiency and transmission power with respect to the moving distance regarding the configuration illustrated in Figs. 4A and 4B.

Figs. 8A to 8C illustrate an example configuration of the power transmission and the power reception coils according to the first embodiment.

Fig. 9 is a chart illustrating a relation between a coupling factor (between the power transmission and the power reception coils) and the moving distance of the power reception coil regarding the configuration illustrated in Figs. 8A to 8C.

Fig. 10 is a chart illustrating a relation between the moving distance of the power reception coil and power/efficiency regarding the configurations illustrated in Figs. 8A to 8C.

Fig. 11 is a chart illustrating a difference in the power transmission efficiency between the configurations illustrated in Figs. 4A and 4B and the configuration illustrated in Figs. 8A to 8C.

Figs. 12A and 12B illustrate other examples of the power transmission and the power reception coils according to the first embodiment.

Figs. 13A and 13B illustrate example configurations of power transmission coils according to a second embodiment.

Figs. 14A and 14B illustrate results of a temperature distribution simulation for the power transmission coils regarding the configurations illustrated in Figs. 13A and 13B.

Figs. 15A and 15B illustrate example configurations of other power transmission coils according to the second embodiment.

DESCRIPTION OF THE EMBODIMENTS

A wireless power transmission system according to the present invention adopts a method for transmitting power by using a magnetic field or both an electric field and a magnetic field, which is referred to as an electromagnetic induction/magnetic field resonance method. Embodiments of the present invention will be described below with reference to the accompanying drawings. Each of the embodiments of the present invention described below can be implemented solely or as a combination of a plurality of the embodiments or features thereof where necessary or where the combination of elements or features from individual embodiments in a single embodiment is beneficial.

Fig. 1 illustrates a configuration of a wireless power transmission system according to a first embodiment. A power transmission system 100 includes a power transmission coil 110, a power transmitter 111, a power reception coil 120, a power receiver 121, and a constant-voltage circuit 122. The power transmitter 111 includes a known power transmission circuit used when the electromagnetic induction method or magnetic field resonance method is adopted. More specifically, the power transmitter 111 converts a direct-current (DC) voltage supplied from a power source unit 106 into a current having a frequency (hereinafter referred to as a carrier frequency) suitable for power transmission using a switching (SW) circuit, and outputs the DC voltage to the power transmission coil 110. In other words, the power transmitter 111 converts the DC voltage into an alternating-current (AC), and the power transmission coil 110 generates an AC magnetic field.

The power receiver 121 also includes a known power reception circuit used when the electromagnetic induction method or magnetic field resonance method is adopted. More specifically, the power receiver 121 converts the AC magnetic field received from the power reception coil 120 into a DC voltage via a rectifying circuit, which is the power receiver 121. The constant-voltage circuit 122 converts the DC voltage into a desired voltage and supplies the voltage to a load 123.

To perform efficient wireless transmission of the energy supplied from the power source unit 106, it is essential to match the input impedance of the power receiver 121 with the power transmission coil 110 and the power reception coil 120. The wireless power transmission system according to the present invention assumes the application to a configuration in which the load 123 slides and moves in a predetermined direction. As the load 123 slides and moves, the power reception coil 120, the power receiver 121, and the constant-voltage circuit 122 similarly slide and move. At this time, the power transmission coil 110 is also extended in a predetermined direction, and the power transmission coil 110 and the power reception coil 120 constantly face each other to maintain a coupling state.

Fig. 2 is a circuit diagram illustrating the power transmission coil 110 and the power reception coil 120 illustrated in Fig. 1, and an input impedance ($R_L$) 207 of the power receiver 121. The power transmission coil 110 includes an inductance component ($L_1$) 201, a resistance component ($r_1$) 202, and a power transmission capacitor ($C_1$) 203 that is series-resonated with the inductance component ($L_1$) 201 at the carrier frequency. The power reception coil 120 includes an inductance component ($L_2$) 204, a resistance component ($r_2$) 205, and a power reception capacitor ($C_2$) 206 that is series-resonated with the inductance component ($L_2$) 204 at the carrier frequency. Fig. 2 also illustrates a current source 208 that serves as the power transmitter 111, and a coupling factor (k) 209 between the power transmission coil 110 and the power reception coil 120.

Formula (1) represents a power transmission efficiency $\eta$ of the circuit diagram in Fig. 2. Formula (1) premises that the power transmission capacitor 203 and the power reception capacitor 206 satisfy a resonance condition with respect to the inductance component ($L_1$) 201 and the inductance component ($L_2$) 204, respectively.

$$\eta = \frac{k^2\omega^2 L_1 L_2 R_L}{r_1(R_L + r_2)^2 + k^2\omega^2 L_1 L_2 (R_L + r_2)} \quad (1)$$

In order to perform power transmission with the highest efficiency in the circuit configuration in Fig. 2, the condition (impedance matching condition) represented by the following Formula (2) needs to be satisfied. $R_{L_opt}$ denotes the optimum value of the input impedance ($R_L$) 207 of the power receiver 121. A Q value ($Q_1$) of the power transmission coil 110 and a Q value ($Q_2$) of the power reception coil 120 are calculated by Formula (3). ω is calculated by Formula (4). The power transmission system provides the theoretical maximum efficiency when these impedance matching conditions are satisfied. The theoretical maximum efficiency is calculated by Formula (5).

$$R_{L_opt} = r_2\sqrt{1 + k^2 Q_1 Q_2} \quad (2)$$

$$Q_i = \frac{\omega L_i}{r_i} \quad (i = 1,2) \quad (3)$$

$$\omega = \frac{1}{\sqrt{L_1 C_1}} = \frac{1}{\sqrt{L_2 C_2}} \quad (4)$$

$$\eta_{max} = \frac{k^2\, Q_1 Q_2}{\left(1 + \sqrt{1 + k^2 Q_1 Q_2}\right)^2} \quad (5)$$

$r_2$, $r_1$, $L_1$, $L_2$ and the Q values of the power transmission coil 110 and the power reception coil 120 are constants that are uniquely determined when these coil shapes are determined.

Fig. 3 illustrates an example relation between the transmission power required for the wireless power transmission system 100 of the present invention and a moving distance d of the power reception coil 120. For example, this system receives 300 W(watts) power in a region 320 where the moving distance d of the power reception coil 120 is 10 mm(millimeters) or less, and receives 130 W (or more) power in a region 321 where the moving distance d of the power reception coil 120 is longer than 10 mm. The present invention premises that the moving direction of the power reception coil 120 approximately coincides with the extension direction of the power transmission coil 110, and that the power reception coil 120 constantly faces the power transmission coil 110.

In a case of a system having the chart illustrated in Fig. 3, it is necessary to give higher priority to the transmission efficiency in 300 W power reception than the transmission efficiency in 130 W power reception. For example, in a case where the transmission efficiency in 300 W power reception is 80%, the amount of loss is 75 W. When the transmission efficiency in 130 W power reception is 80%, the amount of loss is 32.5 W. This means that the amount of loss differs by at least twice even for the same transmission efficiency. Since the amount of loss is proportional to the coil temperature rise, the transmission efficiency in 300 W power reception needs to be increased to the maximum extent from a viewpoint of simplifying a radiation mechanism.

In terms of the relation between the transmission power and the moving distance d illustrated in Fig. 3, a configuration for achieving highly efficient power transmission will be further considered below with reference to formulas.

Formulas (6) to (13) are calculated by introducing the following two different assumptions:

(a) The effective value of the current flowing through the power transmission coil 110 is constant.
(b) The waveform of the current flowing in the power transmission coil 110 is a sine wave having a single frequency.

The relation between a current $I_1$ flowing in the power transmission coil 110 and a current $I_2$ flowing in the power reception coil 120 is represented by Formula (6).

$$I_1 = \frac{R_L + r_2}{\omega k \sqrt{L_1 L_2}} I_2 = const. \quad (6)$$

Generally, the resistance component (r2) of the power reception coil 120 is sufficiently larger than the input impedance ($R_L$) of the power receiver 121. Thus, the current value can be approximated as represented by Formula (7).

According to the above-introduced assumption (a), an approximate value $I'_1$ of the current $I_1$ flowing in the power transmission coil 110 is also constant.

$$I_1 \approx \frac{R_L}{\omega k\sqrt{L_1 L_2}} I_2 = I_1' \quad (7)$$

An output voltage (the input voltage of the power receiver 121) $V_o$ of the power reception coil 120 is represented by Formula (8).

$$V_o = I_2 R_L = \omega k\sqrt{L_1 L_2} \cdot I_1' \quad (8)$$

Referring to Formula (8), all values other than the coupling factor k are handled as constants. This means that the output voltage $V_o$ of the power reception coil 120 is proportional to the coupling factor k and does not depend on the input impedance $R_L$ of the power receiver 121.

By using the output voltage $V_o$ obtained by Formula (8) and the input impedance $R_L$ of the power receiver 121, transmission power $P_o$ can be calculated by Formula (9).

$$P_o = \frac{V_o^2}{R_L} = \frac{\omega^2 k^2 L_1 L_2}{R_L} \cdot {I_1'}^2 \quad (9)$$

According to Formula (9), the transmission power $P_o$ is determined by the coupling factor k or the input impedance $R_L$ of the power receiver 121 when $r_2$, $r_1$, $L_1$, $L_2$, and $I'_1$ are constants.

By using $V_o$ represented by Formula (8), transmission power $P_{o_opt}$ with the optimum load is calculated by Formula (10).

$$P_{o_opt} = \frac{V_o^2}{R_{L_opt}} = r_1 \frac{k^2 Q_1 Q_2}{\sqrt{1 + k^2 Q_1 Q_2}} \cdot {I_1'}^2 \quad (10)$$

The constants $r_2$, $r_1$, $L_1$, and $L_2$, and the Q values of the power transmission coil 110 and the power reception coil 120 are uniquely determined by the coil shapes. Thus, the proportional relation in Formula (11) is satisfied by Formula (10).

$$P_{o_opt} \propto \frac{k^2}{\sqrt{1 + k^2 Q_1 Q_2}} \quad (11)$$

The Q levels of a general power transmission coil and a general power reception coil are around 10 to 1,000, and thus the relation in Formula (12) is assumed to be satisfied.

$$k^2 Q_1 Q_2 \gg 1 \quad (12)$$

When the relation in Formula (12) is satisfied, Formula (13) can be obtained by approximating the denominator of Formula (11).

$$P_{o_opt} \propto k \quad (13)$$

In other words, Formula (13) indicates that the transmission power $P_{o_opt}$ with the optimum load is proportional to the coupling factor k.

In a wireless power transmission system providing different power with different coil positions, the coupling factor k are to be varied depending on coil positions to provide desired power, accordingly.

Configurations of the prior art and the present embodiment will be compared below.

First, the configuration of the prior art will be described. Fig. 4A illustrates an example configuration of a power transmission coil according to the prior art. A power transmission coil 300 includes a pattern 302 formed on a base material 301. The power transmission coil 300 has a total length of 200 mm and a width of 20 mm. Likewise, a power reception coil 310 includes a pattern 311 formed on a base material 312. The power reception coil 310 has a total length of 30 mm and a width of 20 mm which is the same as the width of the power transmission coil 300.

Each of the power transmission coil 300 and the power reception coil 310 forms a 2-winding coil using two different layers in the z direction.

Fig. 4B illustrates the moving distance d of the power reception coil 310 relative to the power transmission coil 300 in the x direction. A region 320 is equivalent to a transmission region for transmitting high power according to the present embodiment. A region 321 is equivalent to a transmission region for transmitting low power according to the present embodiment.

Fig. 5 illustrates variations of the coupling factor k between the power transmission coil 300 and the power reception coil 310 with respect to the moving distance d varying from 0 to 55 mm. As illustrated in Fig. 5, in the example configuration of the power transmission coil 300 according to the prior art illustrated in Figs. 4A and 4B, the coupling factor k varies very slightly with respect to the variation of the moving distance d.

In the example configuration in Figs. 4A and 4B, the coupling factor k is almost constant with respect to the variation of the moving distance d, as illustrated in Fig. 5. Thus, the input impedance $R_L$ of the power receiver 121 needs to be varied to control the transmission power $P_o$. Table 1 illustrates the electrical performance of the example configuration of the power transmission coil 300 according to the prior art illustrated in Figs. 4A and 4B. The coupling factor k illustrated in Table 1 is a representative value. Assigning these numerical values to Formula (1) obtains the relation between the input impedance $R_L$ of the power receiver 121 and the power transmission efficiency $\eta$.

[Table 1]

| | |
|---|---|
| $L_1$ | 1.4 μH |
| $L_2$ | 0.27 μH |
| $r_1$ | 210 mΩ |
| $r_2$ | 45 mΩ |
| k | 0.28 |

This relation is represented by a chart 601 in Fig. 6. Assigning the values illustrated in Table 1 to Formula (9) obtains the relation between the input impedance $R_L$ of the power receiver 121 and the transmission power $P_o$. This relation is represented by a chart 602 in Fig. 6. A point 612 provides a maximum transmission efficiency of 79.8%. A point 622 provides a transmission power $P_o$ of 310 W at the relevant timing. These points indicate an operation state of the power transmission system in the transmission region for transmitting high power according to the prior art. Increasing the input impedance $R_L$ of the power receiver 121 enables decreasing the transmission power $P_o$. A point 621 provides a transmission power $P_o$ of 132 W. A point 622 provides a transmission efficiency of 72.8% at the relevant timing. These points indicate an operation state of the power transmission system in the transmission region for transmitting low power according to the prior art.

Fig. 7 illustrates a transmission efficiency 701 and transmission power 711 when the input impedance $R_L$ of the power receiver 121 is varied according to the moving distance d by using the power transmission coil 300 according to the prior art. A point 702 provides a maximum transmission efficiency of 79.8%. A point 712 provides a transmission power $P_o$ of 310 W at the relevant timing. These points indicate an operation state of the power transmission system in the transmission region for transmitting high power according to the prior art.

A point 713 provides a transmission power $P_o$ of 132 W. A point 703 provides a transmission efficiency of 72.8% at the relevant timing. These points indicate an operation state of the power transmission system in the transmission region for transmitting low power according to the prior art.

An example configuration of the power transmission coil 300 in the present embodiment.

As illustrated in Figs. 4A and 4B, the ratio of the power in the transmission region for transmitting high power to the power in the transmission region for transmitting low power is about 2.3 in a system for receiving 300 W power in the transmission region for transmitting high power and transmitting 130 W (or more) power in the transmission region for transmitting low power. In other words, referring to Formula (13), highly efficient power transmission is enabled by configuring a transmission coil and a reception coil with which the ratio of the coupling factor k in the transmission region for transmitting high power to the coupling factor k in the transmission region for transmitting low power is about 2.3.

Figs. 8A to 8C illustrate specific examples of a power transmission coil and a power reception coil according to the present embodiment. Fig. 8A is a schematic view illustrating the power transmission and the power reception coils. The long coil is the power transmission coil 801, and the short coil is the power reception coil 802. With the power transmission coil 801 and the power reception coil 802 in Figs. 8A to 8C, the transmission region 321 for transmitting low power is formed of a 2-winding coil, and the transmission region 320 for transmitting high power is formed of a 4-winding coil. Figs. 8B and 8C illustrate example arrangements for actual power transmission by the power transmission coil 801 and the power reception coil 802 according to the present embodiment.

Table 2 illustrates the electrical performance of the specific examples of the power transmission coil 801 and the power reception coil 802 according to the present embodiment illustrated in Figs. 8A to 8C. Coupling factors $k_{high}$ and $k_{low}$ illustrated in Table 2 are representative values of the coupling factors in the transmission region 320 for transmitting high power and the transmission region 321 for transmitting low power, respectively. The ratio of the coupling factor $k_{high}$ to the coupling factor $k_{low}$ is about 2.37.

[Table 2]

| | |
|---|---|
| $L_1$ | 2.3 μH |
| $L_2$ | 0.26 μH |
| $r_1$ | 360 mΩ |
| $r_2$ | 45 mΩ |
| $k_{high}$ | 0.45 |
| $k_{low}$ | 0.19 |

Fig. 9 illustrates variations of the coupling factor between the power transmission coil and the reception coil, i.e., a power transmission coil 900 and a power reception coil 910 with respect to the moving distance d varying from 0 to 55 mm according to the present embodiment.

Referring to Fig. 5, the coupling factor between the power transmission coil 300 and the power reception coil 310 varies very slightly with respect to the variation of the moving distance d.

In contrast, the variation of the coupling factor between the power transmission coil 801 and the power reception coil 802 illustrated in Figs. 8A to 8C decreases with the movement from the transmission region 320 for transmitting high power to the transmission region 321 for transmitting low power, and converges to an almost constant value in a range of the moving distance d of 40 mm or longer.

Assigning the electrical performance in Table 2 to Formulas (5) and (9) obtains the relation between the moving distance and the power and efficiency of the power transmission coil 801 and the power reception coil 802 in Figs. 8A to 8C according to the present embodiment. Fig. 10 illustrates a transmission efficiency 1000 and transmission power 1010.

A point 1001 provides a maximum transmission efficiency of 87%. A point 1011 provides a transmission power $P_o$ of 330 W at the relevant timing. These points indicate an operation state of the power transmission system using the power transmission coil 801 and the power reception coil 802 in the transmission region for transmitting high power according to the present embodiment.

A point 1012 provides a transmission power $P_o$ of 136 W. A point 1002 provides a transmission efficiency of 72.3% at the relevant timing. These points indicate an operation state of the power transmission system using the power transmission coil 801 and the power reception coil 802 in the transmission region for transmitting low power according to the present embodiment.

Fig. 11 illustrates a difference in the transmission efficiency between the prior art and the present embodiment. This means that, when a chart 1100 is in a positive value, the transmission efficiency of the power transmission coil 801 and the power reception coil 802 according to the present embodiment exceeds the transmission efficiency of the power transmission coil 300 according to the prior art. In the transmission region 320 for transmitting high power, the transmission efficiency improves by 7.5%. Assuming that transmission power is 300 W, this corresponds to a loss reduction of about 33.3 W. For small power transmission and reception coils, a loss reduction of 33.3 W provides major advantages from the viewpoint of simplifying the radiation mechanism and cost reduction. This means that the transmission efficiency is remarkably improved (loss reduction) in the transmission region 320 for transmitting high power. Meanwhile, in the transmission region 321 for transmitting low power, a transmission efficiency deterioration of up to about 4% locally occurs in the vicinity of the moving distance d of around 33 mm. Assuming that transmission power is 130 W, this corresponds to a loss increase of about 6 W. However, this loss decreases with increasing moving distance d and becomes almost zero when the moving distance d exceeds 55 mm. In other words, this system reduces the amount of overall loss of the coils and also lowers the coil temperature rise.

Figs. 12A and 12B schematically illustrate other examples of the power transmission and the power reception coils according to the present embodiment. Referring to Figs. 12A and 12B, the transmission region 321 for transmitting low power is formed of a 2-winding coil. The transmission region 320 for transmitting high power is formed of a 4-winding coil. Fig. 12A illustrates a configuration in which the widths of the transmission region 320 for transmitting high power (in the vertical and horizontal directions) are different from the widths of the transmission region 321 for transmitting low power. From a different viewpoint, the transmission region 320 for transmitting high power (the region with a larger number of windings) is incorporated in the transmission region 321 for transmitting low power (the region with a smaller number of windings). Fig. 12B illustrates a configuration in which the widths of the transmission region 320 for transmitting high power (in the vertical and horizontal directions) are different from the widths of the transmission region 321 for transmitting low power, and the widths of the transmission region 320 for transmitting high power are larger than the widths of the transmission region 321 for transmitting low power.

The relation between the transmission power and the moving distance according to the present embodiment is to be considered as illustrative. The configuration of the present invention is also applicable to a case where the area of the transmission region for transmitting high power is larger than the area of the transmission region for transmitting low power.

According to the present embodiment, the number of windings of the power transmission coil is changed to change the coupling factor in the transmission region 320 for transmitting high power and the coupling factor in the transmission region 321 for transmitting low power. Thus, the wireless power transmission system is adjusted to operate in the vicinity of the optimum load.

If the above-described adjustment is not sufficient, the value of the load can be adjusted. In this case, for example, the system can include a position detection unit for detecting the position of the power reception coil, and a load control unit for controlling the load. The position detection unit can detect that the power reception coil is positioned in the transmission region 320 for transmitting high power, and then the load control unit can control the value of the load.

A second embodiment will now be described centering on a configuration for further lowering the temperature rise of the entire coils. Figs. 13A and 13B illustrate specific examples of power transmission coils including a substrate having a plurality of layers according to the second embodiment.

Fig. 13A illustrates a first type of configuration of the present embodiment. The power transmission coil 110 is formed of a 4-layer substrate, a 3-winding conductor pattern in the transmission region 320 for transmitting high power, and a 1-winding conductor pattern in the transmission region 321 for transmitting low power. The two different conductor patterns are formed on the substrate. A supporting member 1300 is disposed below the power transmission coil 110. When a current flows in the power transmission coil 110, the generated heat is transferred to the supporting member 1300, thus lowering the temperature of the power transmission coil 110. The supporting member 1300 is a magnetic substance or a metal having an insulation-treated surface.

Fig. 13B illustrates a second type of configuration of the present embodiment. In addition to the configuration in Fig. 13A, a conductor pattern having the same shape as a 1-winding conductor pattern is formed on all the layers of the substrate of the transmission region 321 for transmitting low power, and the plurally of layers is connected with conductors such as one or more via-holes. Typically, the resistance of a conductor is inversely proportional to the cross-section area. Thus, the configuration illustrated in Fig. 13B increases the cross-section area and reduces the resistance. Further, the resistance of a conductor is proportional to the temperature of the conductor.

More specifically, the resistance value increases as the temperature of the conductor increases, and the resistance value decreases as the temperature of the conductor decreases. This means that the temperature of a conductor pattern needs to be maintained low even in high power transmission. The heat conductivity of a conductor is typically higher than the heat conductivity of a base material such as FR-4. Thus, the radiation performance for the supporting member 1300 can be improved by replacing the base materials of all the layers of the substrate of the transmission region 321 for transmitting low power with conductor patterns.

Figs. 14A and 14B illustrate results of a temperature distribution simulation for the power transmission coil 110 according to the present embodiment. Fig. 14A illustrates the temperature distribution in a configuration before the application of the present embodiment illustrated in Fig. 13A. At this time, the power reception coil 120 is disposed to face the transmission region 321 for transmitting low power. The temperature of the transmission region 320 for transmitting high power is the highest (up to 85°C), and decreases toward the transmission region 321 for transmitting low power. Fig. 14B illustrates the temperature distribution in the configuration after the application of the present embodiment in Fig. 13B. The temperature of the transmission region 320 for transmitting high power is the highest (up to 55°C), and decreases toward the transmission region 321 for transmitting low power. The above-described results ensure that the present embodiment can lower the temperature of the power transmission coil 110.

The power transmission coil 110 can also be configured only with conductors, like an edgewise coil. Figs. 15A and 15B illustrate examples of the power transmission coils formed with conductors according to the present embodiment. Fig. 15A illustrates a configuration before the application of the present embodiment. The power transmission coil 110 includes a 3-winding conductor in the transmission region 320 for transmitting high power, and a 1-winding conductor in the transmission region 321 for transmitting low power.

The supporting member 1300 is disposed below the power transmission coil 110. When a current flows in the power transmission coil 110, the generated heat is transferred to the supporting member 1300, thus lowering the temperature of the power transmission coil 110.

The supporting member 1300 is a magnetic substance or a metal having an insulation-treated surface. Fig. 15B illustrates a configuration after the application of the present embodiment. The conductor thickness in the transmission region 321 for transmitting low power in Fig. 15A is made larger than the thickness of the 1-winding conductor so that the thickened conductor comes into contact with the supporting member 1300. The heat conductivity of a conductor is typically higher than the heat conductivity of air. Thus, the radiation performance for the supporting member 1300 can be improved by replacing the air in the transmission region 321 for transmitting low power with conductors.

The disclosure of the present embodiment also includes the following configurations.

(Configuration 1)

A wireless power transmission system comprising:

a power transmission coil and a power reception coil disposed to face each other and configured to move relative to each other,
wherein the power transmission coil includes a first transmission region for forming a coil having a first number of windings, and a second transmission region for forming a coil having a second number of windings that is less than the first number of windings, and
wherein first power transmitted to the power reception coil in the first transmission region is larger than second power transmitted to the power reception coil in the second transmission region.

(Configuration 2)

The wireless power transmission system according to configuration 1, wherein a first coupling factor between the power transmission coil and the power reception coil in the first transmission region is larger than a second coupling factor between the power transmission coil and the power reception coil in the second transmission region.

(Configuration 3)

The wireless power transmission system according to configuration 1 or 2, wherein the area of the first transmission region is different from the area of the second transmission region.

(Configuration 4)

The wireless power transmission system according to any one of configurations 1 to 3, wherein a power transmission efficiency in the first transmission region is higher than a power transmission efficiency in the second transmission region.

(Configuration 5)

The wireless power transmission system according to any one of configurations 1 to 4, wherein the first number of windings is four, and the second number of windings is two.

(Configuration 6)

The wireless power transmission system according to any one of configurations 1 to 5, further comprising a position detection unit configured to detect whether the power reception coil is positioned in the first transmission region or the second transmission region.

(Configuration 7)

The wireless power transmission system according to any one of configurations 1 to 6, further comprising a load control unit configured to control the value of a load depending on transmission power.

(Configuration 8)

The wireless power transmission system according to any one of configurations 1 to 7, further comprising a member for supporting the power transmission coil.

(Configuration 9)

The wireless power transmission system according to any one of configurations 1 to 7, wherein a conductor thickness of the power transmission coil in the second transmission region is larger than a conductor thickness of the power transmission coil in the first transmission region.

(Configuration 10)

The wireless power transmission system according to any one of configurations 1 to 8, wherein the power transmission coil comprises a substrate formed of a plurality of layers, and a conductor pattern formed in the second transmission region is formed of two or more layers.

(Configuration 11)

The wireless power transmission system according to configuration 10, wherein the conductor pattern formed in the second transmission region and formed of two or more layers is connected with conductors.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A wireless power transmission system comprising:

   a power transmission coil (801) and a power reception coil (802) disposed to face each other for moving relative to each other,
   wherein the power transmission coil (801) includes a first transmission region (320) for forming a coil having a first number of windings, and a second transmission region (321) for forming a coil having a second number of windings that is less than the first number of windings, and
   wherein a first power transmitted to the power reception coil (802) in the first transmission region (320) is larger than a second power transmitted to the power reception coil (802) in the second transmission region (321).

2. The wireless power transmission system according to claim 1, wherein a first coupling factor between the power transmission coil (801) and the power reception coil (802) in the first transmission region (320) is larger than a second coupling factor between the power transmission coil (801) and the power reception coil (802) in the second transmission region (321).

3. The wireless power transmission system according to claim 1, wherein an area of the first transmission region (320) is different from an area of the second transmission region (321).

4. The wireless power transmission system according to claim 1, wherein a power transmission efficiency in the first transmission region (320) is higher than a power transmission efficiency in the second transmission region (321).

5. The wireless power transmission system according to claim 1, wherein the first number of windings is four, and the second number of windings is two.

6. The wireless power transmission system according to claim 1, further comprising position detection means for detecting that the power reception coil (802) is positioned in the first transmission region (320) or the second transmission region (321).

7. The wireless power transmission system according to claim 1, further comprising load control means for controlling a value of a load depending on transmission power.

8. The wireless power transmission system according to claim 1, further comprising a member for supporting the power transmission coil (801).

9. The wireless power transmission system according to claim 1, wherein a conductor thickness of the power transmission coil (801) in the second transmission region (321) is larger than a conductor thickness of the power transmission coil (801) in the first transmission region (320).

**10.** The wireless power transmission system according to claim 1, wherein the power transmission coil (801) comprises a substrate formed of a plurality of layers, and a conductor pattern formed in the second transmission region (321) is formed of two or more layers.

**11.** The wireless power transmission system according to claim 10, wherein the conductor pattern formed in the second transmission region (321) and formed of two or more layers is connected with conductors.

FIG.1

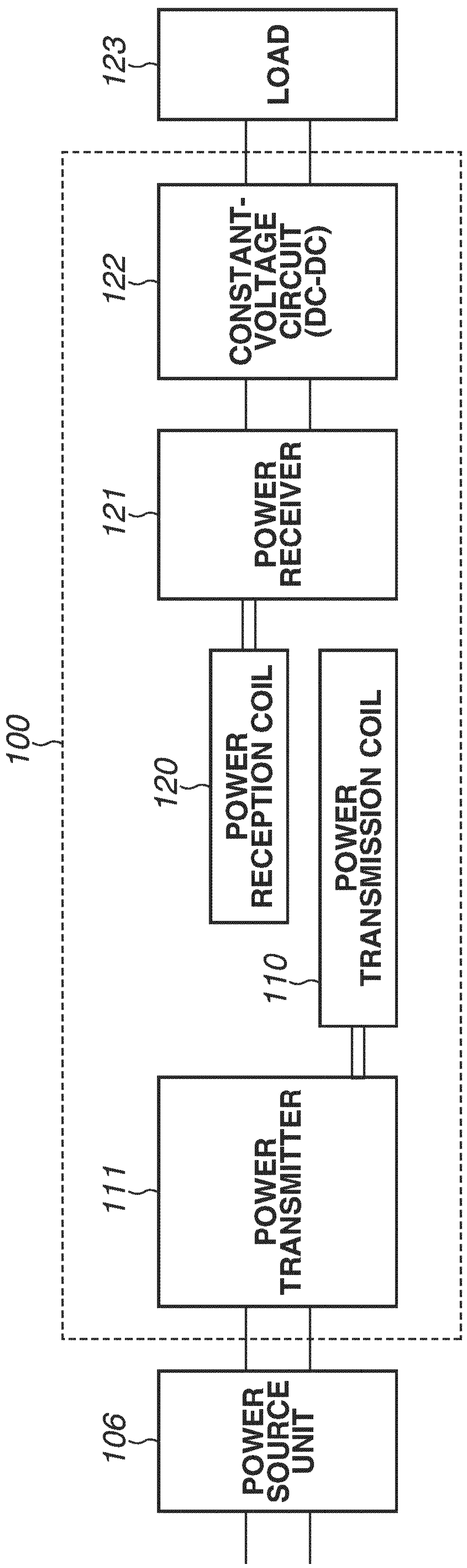
123
LOAD
100
122
CONSTANT-VOLTAGE CIRCUIT (DC-DC)
121
POWER RECEIVER
120
POWER RECEPTION COIL
110
POWER TRANSMISSION COIL
111
POWER TRANSMITTER
106
POWER SOURCE UNIT

FIG.2

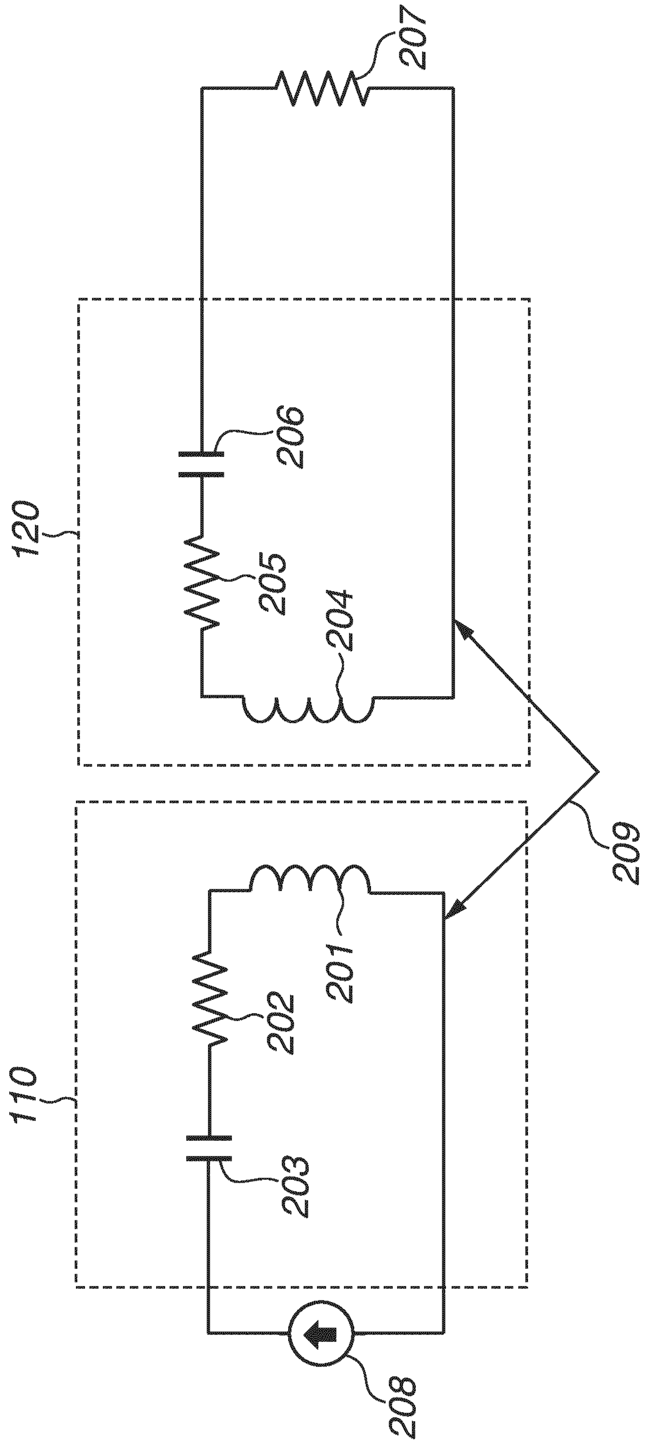

# FIG.3

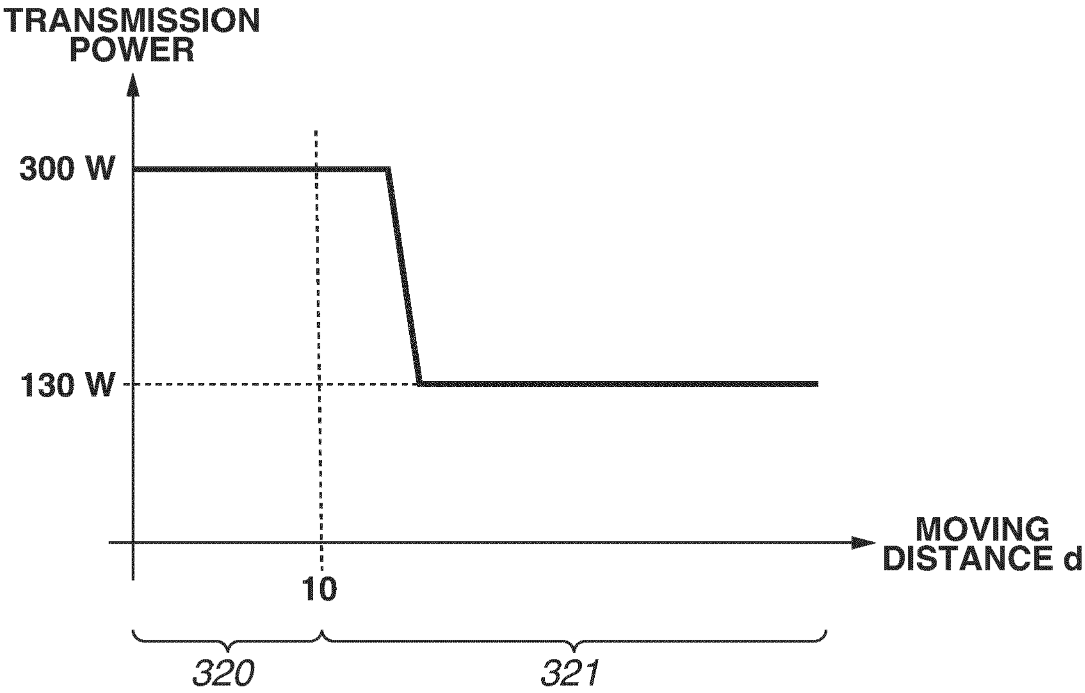

FIG.4A

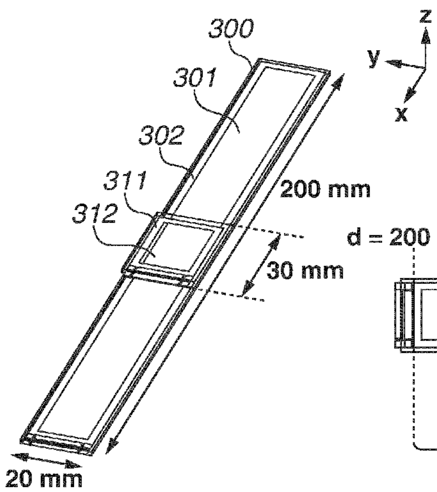
300
301
302
311
312
z
y
x
200 mm
30 mm
20 mm

FIG.4B

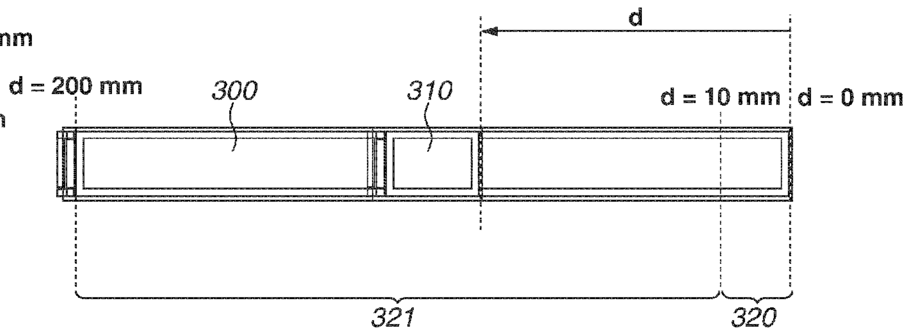
d
d = 200 mm
300
310
d = 10 mm
d = 0 mm
321
320

FIG.5

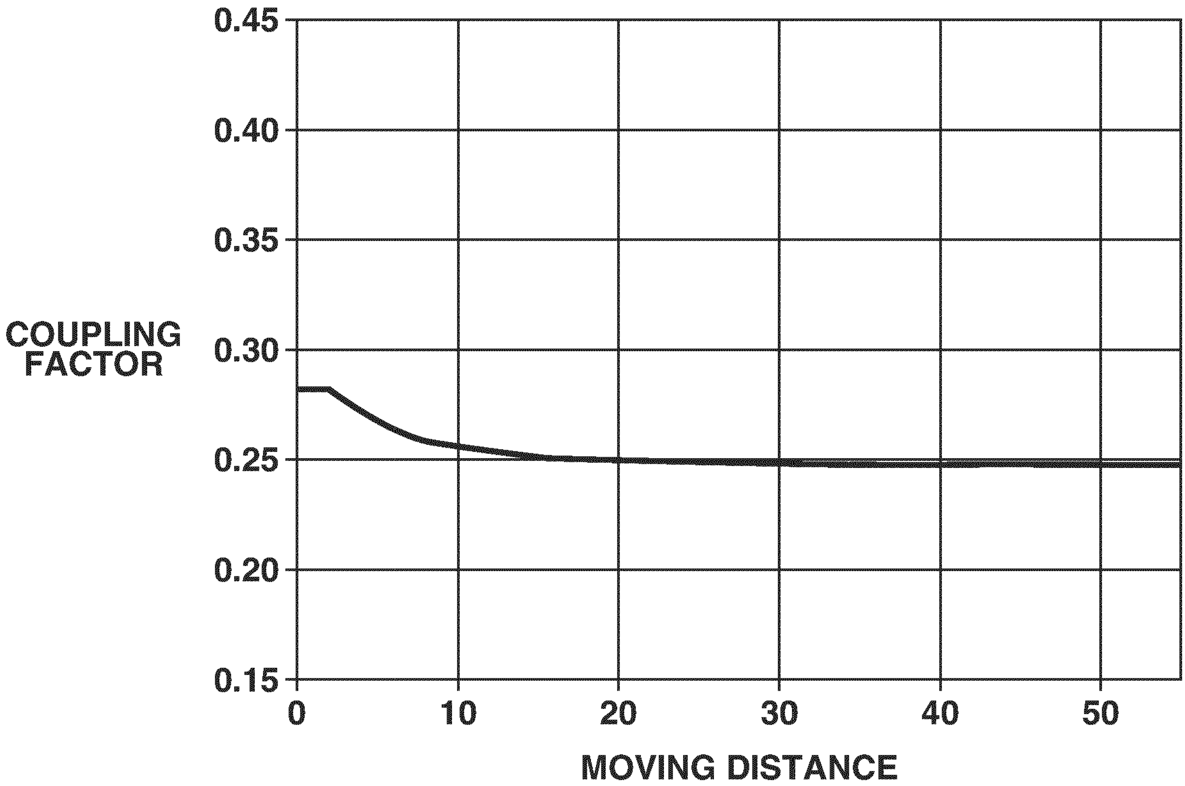
COUPLING FACTOR
0.45
0.40
0.35
0.30
0.25
0.20
0.15
0
10
20
30
40
50
MOVING DISTANCE

# FIG.6

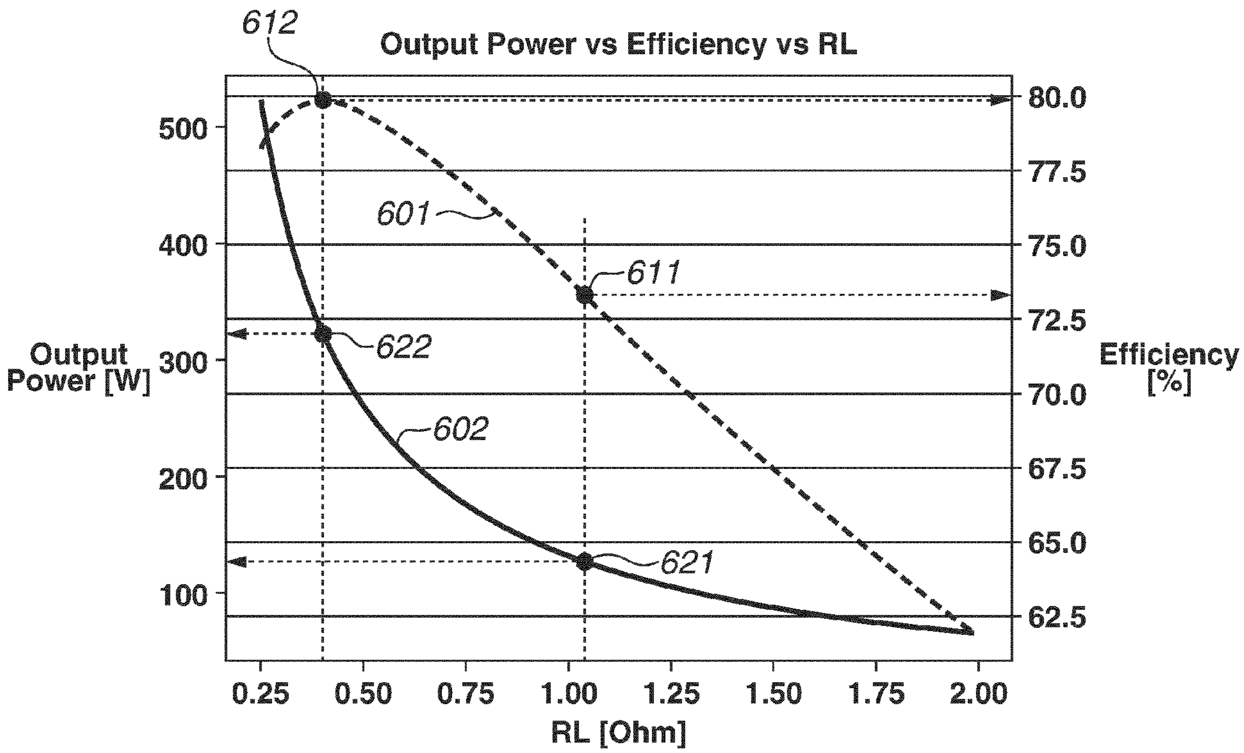
612
Output Power vs Efficiency vs RL
500
400
300
200
100
Output Power [W]
80.0
77.5
75.0
72.5
70.0
67.5
65.0
62.5
Efficiency [%]
601
611
622
602
621
0.25
0.50
0.75
1.00
1.25
1.50
1.75
2.00
RL [Ohm]

# FIG.7

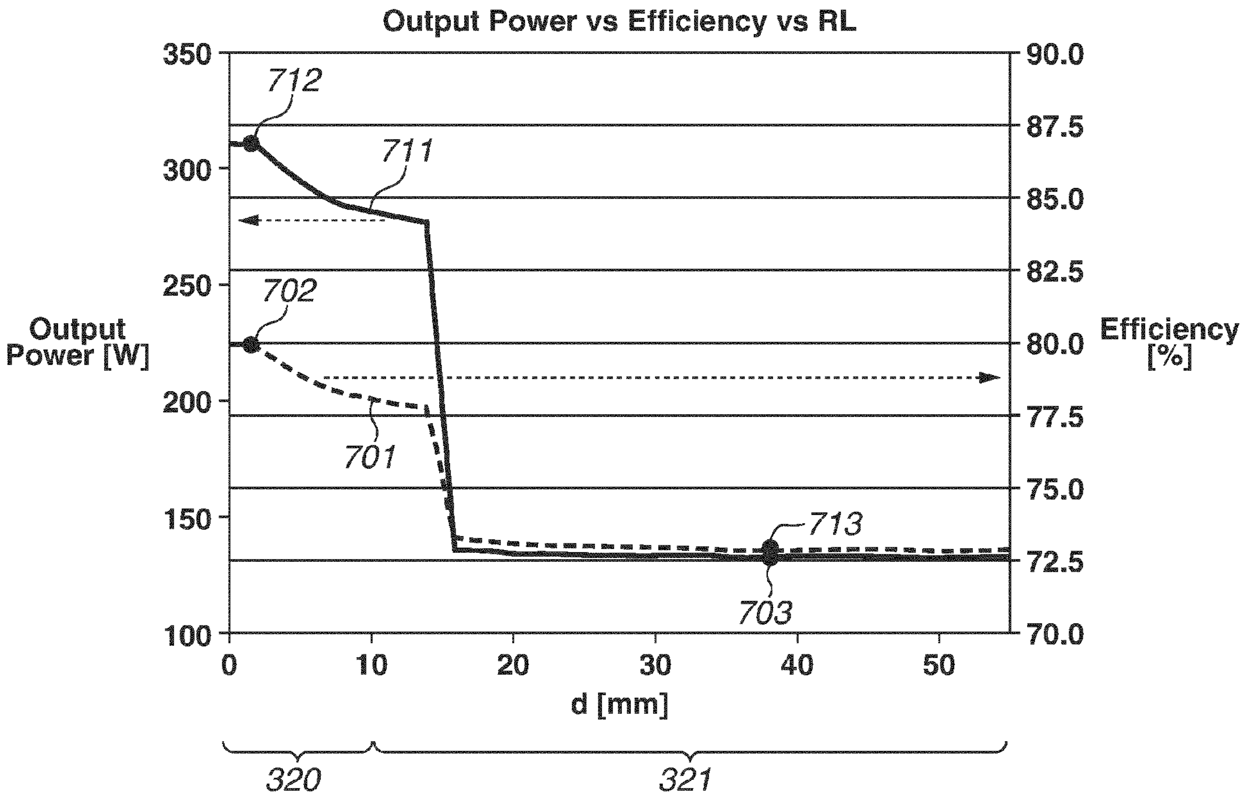
Output Power vs Efficiency vs RL
350
300
250
200
150
100
Output Power [W]
90.0
87.5
85.0
82.5
80.0
77.5
75.0
72.5
70.0
Efficiency [%]
712
711
702
701
713
703
0
10
20
30
40
50
d [mm]
320
321

FIG.8A

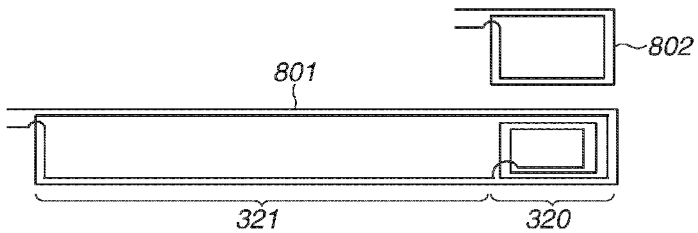


FIG.8B

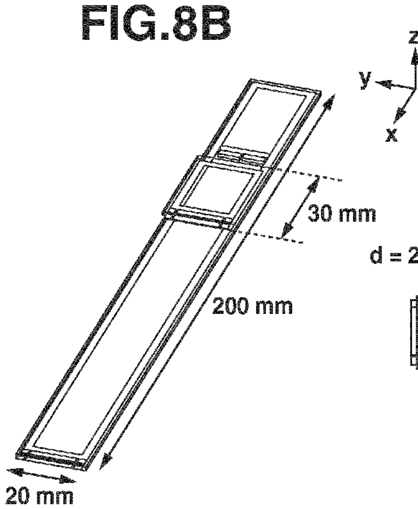


FIG.8C

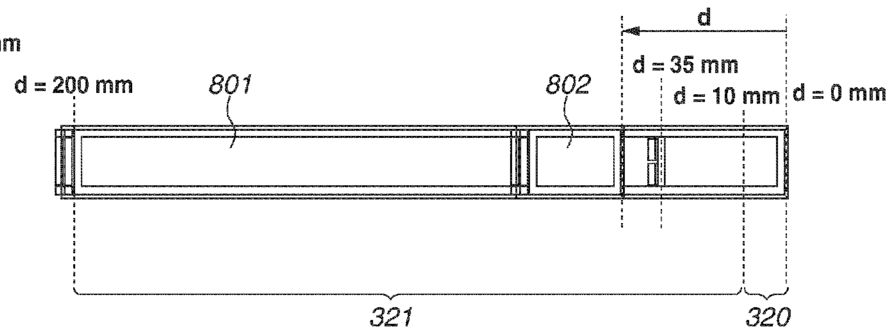

# FIG.9

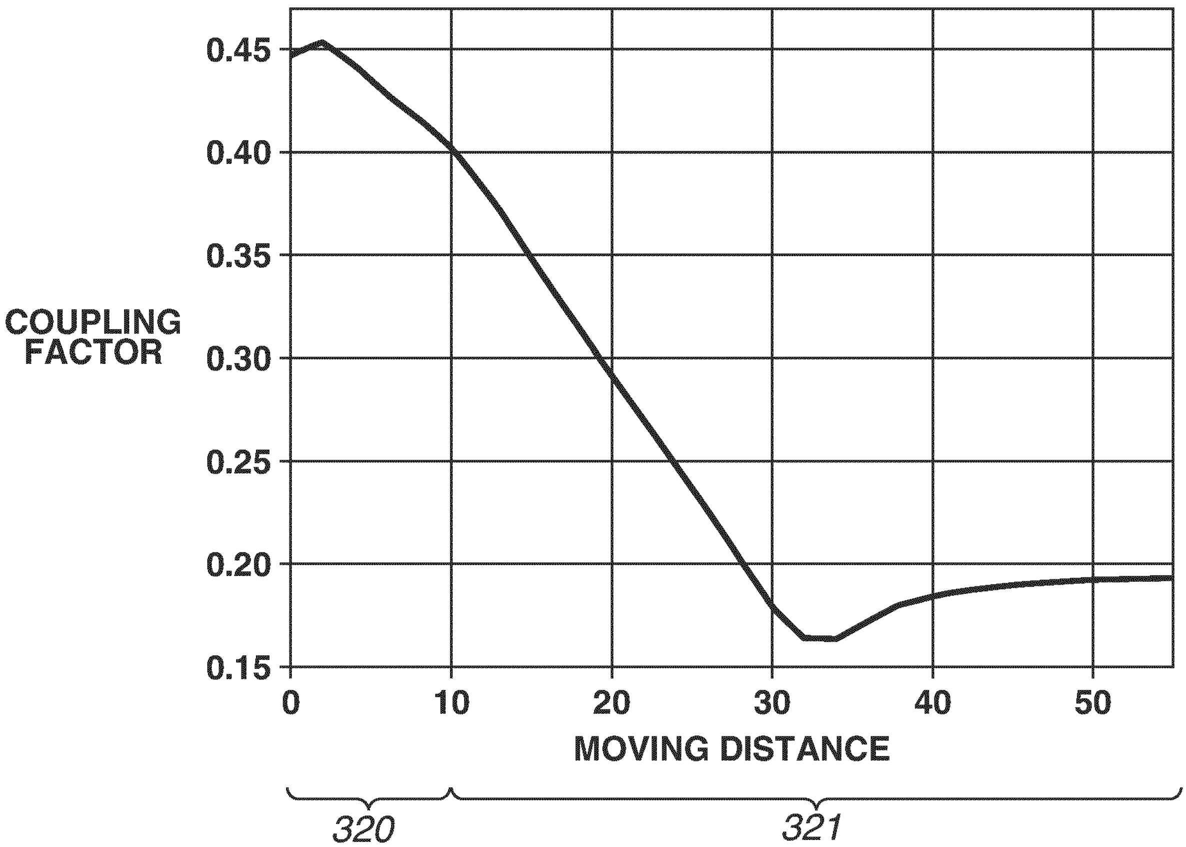
COUPLING FACTOR
0.45
0.40
0.35
0.30
0.25
0.20
0.15
0
10
20
30
40
50
MOVING DISTANCE
320
321

# FIG.10

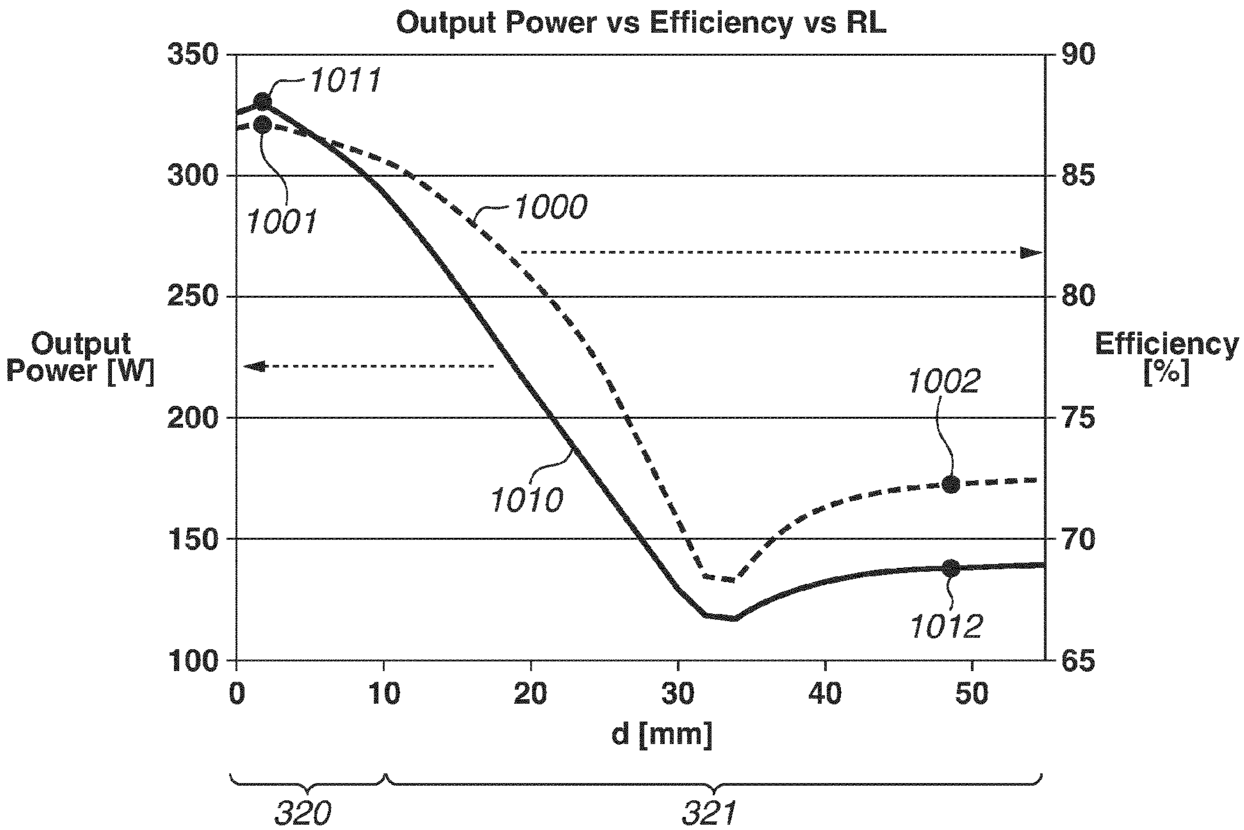
Output Power vs Efficiency vs RL
350
300
250
200
150
100
90
85
80
75
70
65
Output Power [W]
Efficiency [%]
0
10
20
30
40
50
d [mm]
1011
1001
1000
1002
1010
1012
320
321

# FIG.11

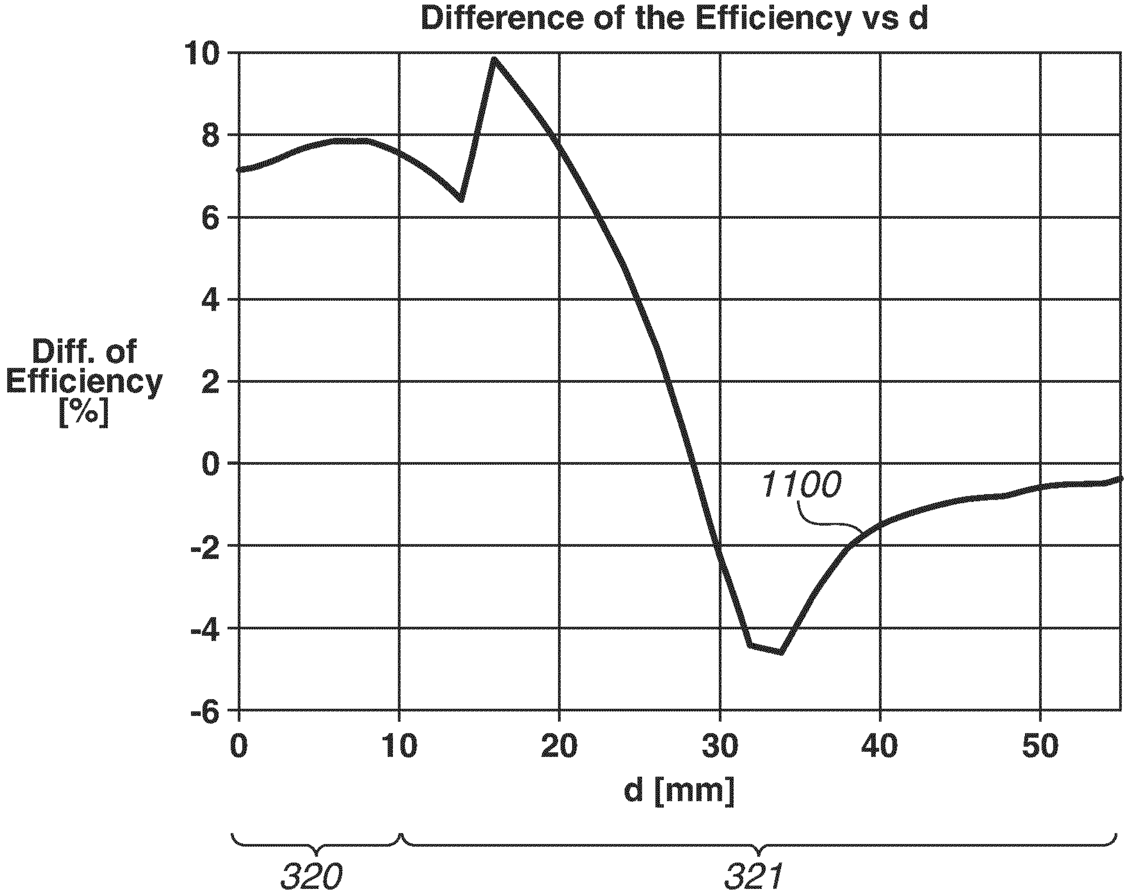
Difference of the Efficiency vs d
Diff. of Efficiency [%]
10
8
6
4
2
0
-2
-4
-6
0
10
20
30
40
50
d [mm]
1100
320
321

# FIG.12A

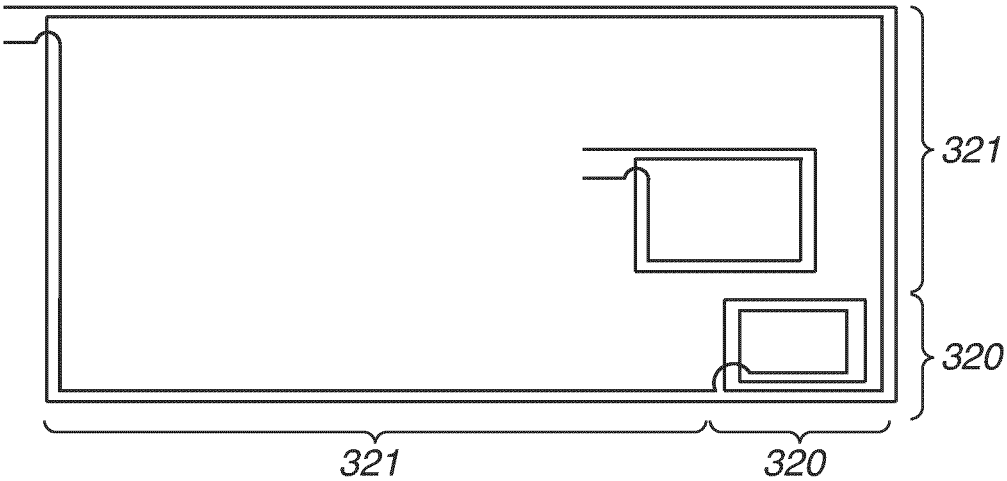


# FIG.12B

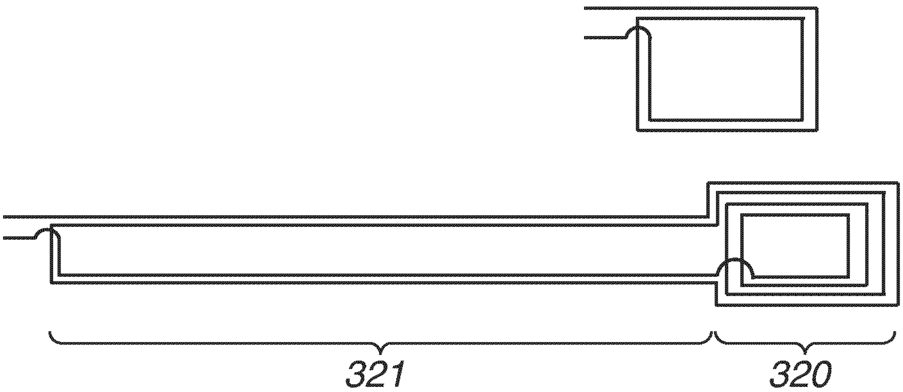

FIG.13A

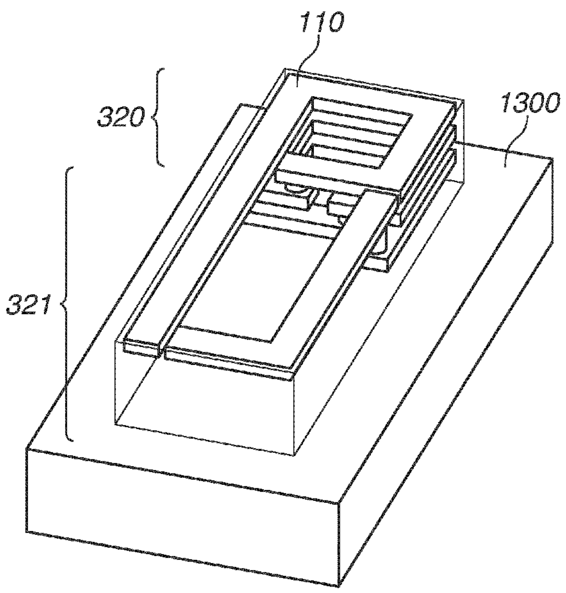


FIG.13B

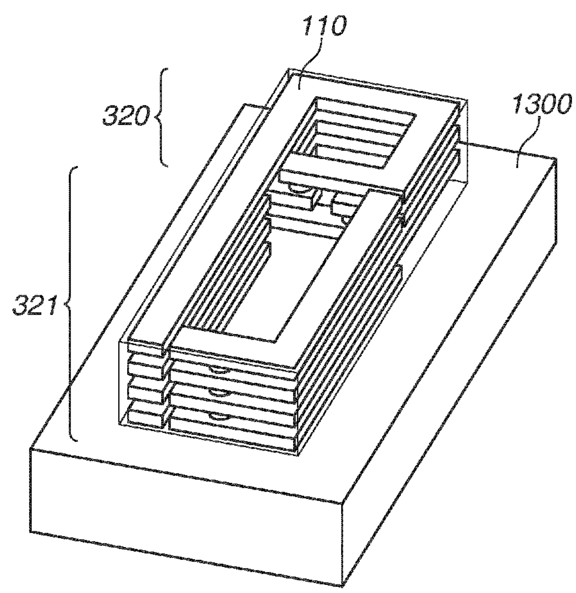

FIG.14A

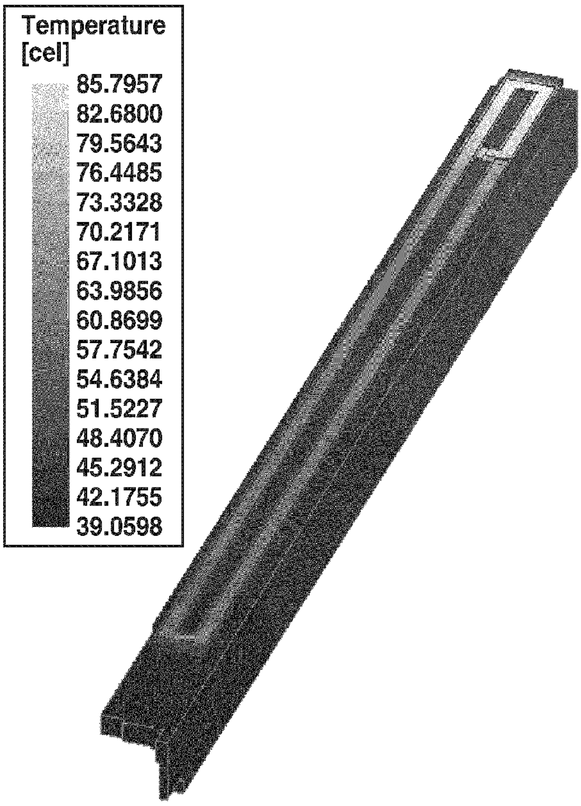


FIG.14B

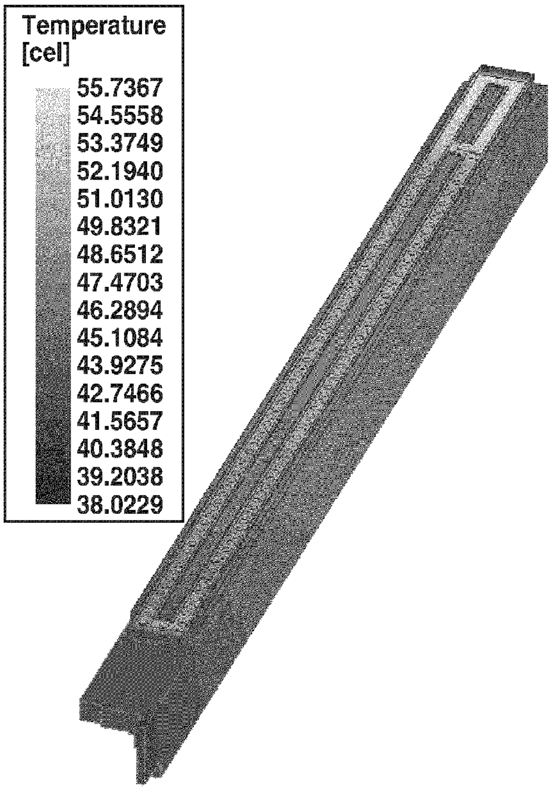

FIG.15A

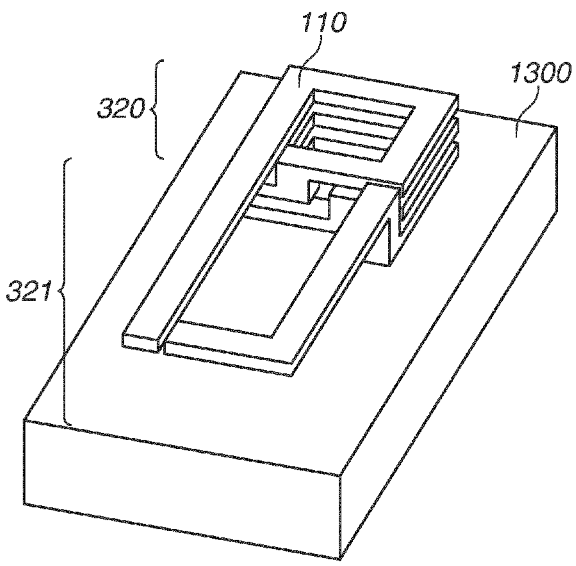


FIG.15B

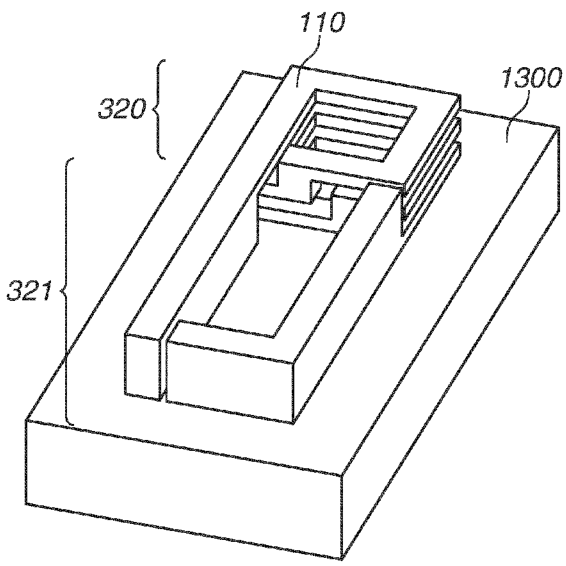

Europäisches Patentamt
European Patent Office
Office européen des brevets

# EUROPEAN SEARCH REPORT

Application Number
EP 25 15 8907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP WO20 1312 5072 A1 (LEQUIO POWER TECH CORP [JP]) 30 July 2015 (2015-07-30)<br>* paragraphs [0017], [0022] - [0027], [0039] - [0043]; figures 1,3,4,6,7 *<br>----- | 1-5,7,8<br>9-11 | INV.<br>H02J50/00<br>H02J50/10<br>H02J50/40 |
| X | US 2019/251549 A1 (LEE WOO-SUP [KR] ET AL) 15 August 2019 (2019-08-15)<br>* paragraph [0174] - paragraph [0181]; figures 14-17 *<br>* paragraph [0241]; figure 28 *<br>----- | 1-8 | |
| X | CN 111 193 329 A (UNIV CHONGQING) 22 May 2020 (2020-05-22)<br>* abstract; figures 1,5,6,9 *<br>* paragraph [0031] - paragraph [0055] *<br>----- | 1-4,7,8 | |
| Y | US 2020/005991 A1 (WU CHIEN-TE [TW]) 2 January 2020 (2020-01-02)<br>* paragraph [0030]; figure 4 *<br>----- | 9 | |
| Y | US 9 941 576 B2 (MURATA MANUFACTURING CO [JP]) 10 April 2018 (2018-04-10)<br>* column 7, line 46 - line 64; figure 2 *<br>----- | 10,11 | TECHNICAL FIELDS SEARCHED (IPC)<br>H02J<br>H01F |

The present search report has been drawn up for all claims

1

| Place of search | Date of completion of the search | Examiner |
|---|---|---|
| Munich | 8 July 2025 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 8907

This annex lists the patent family members relating to the patent documents cited in the above-mentioned European search report. The members are as contained in the European Patent Office EDP file on
The European Patent Office is in no way liable for these particulars which are merely given for the purpose of information.

08-07-2025

| Patent document cited in search report | Publication date | Patent family member(s) | Publication date |
|---|---|---|---|
| JP WO2013125072 A1 | 30-07-2015 | EP 2824678 A1 | 14-01-2015 |
| | | JP 5590588 B2 | 17-09-2014 |
| | | JP WO2013125072 A1 | 30-07-2015 |
| | | TW 201336199 A | 01-09-2013 |
| | | WO 2013125072 A1 | 29-08-2013 |
| US 2019251549 A1 | 15-08-2019 | CN 105809428 A | 27-07-2016 |
| | | CN 107844971 A | 27-03-2018 |
| | | EP 3048666 A2 | 27-07-2016 |
| | | US 2016210616 A1 | 21-07-2016 |
| | | US 2019251549 A1 | 15-08-2019 |
| | | US 2020175498 A1 | 04-06-2020 |
| | | WO 2016117951 A1 | 28-07-2016 |
| CN 111193329 A | 22-05-2020 | NONE | |
| US 2020005991 A1 | 02-01-2020 | CN 110648832 A | 03-01-2020 |
| | | TW 202001945 A | 01-01-2020 |
| | | US 2020005991 A1 | 02-01-2020 |
| US 9941576 B2 | 10-04-2018 | CN 206134945 U | 26-04-2017 |
| | | CN 206727227 U | 08-12-2017 |
| | | JP 6233504 B2 | 22-11-2017 |
| | | JP WO2015147133 A1 | 13-04-2017 |
| | | US 2017005399 A1 | 05-01-2017 |
| | | WO 2015147133 A1 | 01-10-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013014056 A
- JP 2018074855 A